# EUROPÄISCHE PATENTANMELDUNG

(11) **EP 4 501 703 A1**
(43) Veröffentlichungstag der Anmeldung: **05.02.2025**
(21) Anmeldenummer: 24179889.1
(22) Anmeldetag: 04.06.2024
(51) Int. Cl.: B60N 2/225

(54) **BESCHLAG FÜR EINEN FAHRZEUGSITZ SOWIE FAHRZEUGSITZ**

(30) Priorität: 31.07.2023 DE 102023120273
(71) Anmelder: Adient US LLC, Plymouth, MI 48170 (US)
(72) Erfinder: Subramanian, Karthikeyan Maharajapuram, 51381 Leverkusen (DE); Mérés, Eduard, 90901 Skalica (SK); Vomberg, Ralf, 45481 Mülheim (DE); Scholz, Grit, 42897 Remscheid (DE); Albert Reginold, Kirubaharan, 51399 Burscheid (DE)
(74) Vertreter: Liedhegener, Ralf

(57) **Zusammenfassung**

Die Erfindung betrifft einen Beschlag (100; 200; 300; 400) für einen Fahrzeugsitz (10), der Beschlag (100; 200; 300; 400) aufweisend ein erstes Beschlagteil (110; 210; 310; 410), ein zweites Beschlagteil (120; 220; 320; 420) und einen das erste Beschlagteil (110; 210; 310; 410) und das zweite Beschlagteil (120; 220; 320; 420) um eine Exzentrizität (EX) exzentrisch zueinander lagernden Exzenter (150; 250; 350; 450), wobei bei einer auf den Beschlag (100; 200; 300; 400) wirkenden Überlast, insbesondere bei einem um die Drehachse (A) wirkenden Überlast-Drehmoment, das erste Beschlagteil (110; 210; 310; 410) und das zweite Beschlagteil (120; 220; 320; 420) mittels wenigstens eines radial außerhalb des Exzenters (150; 250; 350; 450) angeordneten Stützringsegments (180; 280; 380; 480) radial aneinander abstützbar sind. Die Erfindung betrifft zudem einen Fahrzeugsitz (10), insbesondere für ein Kraftfahrzeug, aufweisend wenigstens einen solchen Beschlag (100; 200; 300; 400).

## Beschreibung

Die Erfindung betrifft einen Beschlag für einen Fahrzeugsitz, der Beschlag aufweisend ein erstes Beschlagteil, ein zweites Beschlagteil und einen das erste Beschlagteil und das zweite Beschlagteil aneinander lagernden Exzenter, das erste Beschlagteil aufweisend einen Zahnkranz und das zweite Beschlagteil aufweisend ein um eine Exzentrizität exzentrisch zum Zahnkranz angeordnetes Zahnrad, wobei der Zahnkranz und das Zahnrad miteinander in Zahneingriff sind, wobei zum Antrieb einer relativen Abwälzbewegung von Zahnrad und Zahnkranz der Exzenter um eine Drehachse drehbar ist. einen Fahrzeugsitz.

### Stand der Technik

Aus der WO 2012/110213 A1 ist ein Beschlag für einen Fahrzeugsitz bekannt, der Beschlag aufweisend ein erstes Beschlagteil und ein zweites Beschlagteil, welche relativ zueinander verdrehbar sind und welche miteinander in Getriebeverbindung stehen mittels eines Zahnkranzes und eines mit dem Zahnkranz kämmenden Zahnrades, und einen von einem Mitnehmer angetriebenen, in Umfangsrichtung umlaufenden Exzenter zum Antrieb einer relativen Abwälzbewegung von Zahnrad und Zahnkranz.

### Aufgabe

Der Erfindung liegt die Aufgabe zu Grunde, einen Beschlag der eingangs genannten Art zu verbessern, insbesondere die Festigkeit des Beschlags zu erhöhen. Insbesondere sollen das Zahnkranz und der Zahnrad auch unter hoher Belastung nicht außer Eingriff geraten können, auch nicht teilweise außer Eingriff geraten können. Der Erfindung liegt zudem die Aufgabe zu Grunde einen besonders sicheren Fahrzeugsitz bereitzustellen.

### Lösung

Diese Aufgabe wird erfindungsgemäß gelöst durch einen Beschlag für einen Fahrzeugsitz, der Beschlag aufweisend ein erstes Beschlagteil, ein zweites Beschlagteil und einen das erste Beschlagteil und das zweite Beschlagteil um eine Exzentrizität exzentrisch zueinander lagernden Exzenter, das erste Beschlagteil aufweisend einen Zahnkranz und das zweite Beschlagteil aufweisend ein Zahnrad, wobei der Zahnkranz und das Zahnrad miteinander in Zahneingriff sind, wobei zum Antrieb einer relativen Abwälzbewegung von Zahnrad und Zahnkranz der Exzenter um eine Drehachse drehbar ist, wobei wenigstens ein mit dem Exzenter mitdrehendes Stützringsegment radial außerhalb des Exzenters angeordnet ist, und bei einer auf den Beschlag wirkenden Überlast, insbesondere bei einem um die Drehachse wirkenden Überlast-Drehmoment, das erste Beschlagteil und das zweite Beschlagteil mittels des wenigstens einen Stützringsegments radial aneinander abstützbar sind.

Dadurch, dass wenigstens ein mit dem Exzenter mitdrehendes Stützringsegment radial außerhalb des Exzenters angeordnet ist, und bei einer auf den Beschlag wirkenden Überlast, insbesondere bei einem um die Drehachse wirkenden Überlast-Drehmoment, das erste Beschlagteil und das zweite Beschlagteil mittels des wenigstens einen Stützringsegments radial aneinander abstützbar sind, bleiben die Verzahnungen von Zahnrad und Zahnkranz bis in einen sehr hohen Lastbereich im Eingriff, wodurch die Festigkeit des Beschlags erhöht ist.

Vorteilhafte Ausgestaltungen, welche einzeln oder in Kombination miteinander eingesetzt werden können, sind Gegenstand der Unteransprüche.

Der Exzenter kann zwei Keilsegmente und ein Mitnehmersegment aufweisen. Der Exzenter kann aus zwei Keilsegmenten und einem Mitnehmersegment bestehen. Der Exzenter kann radial innerhalb einer Öffnung eines der Beschlagteile angeordnet sein. Der Exzenter kann radial innerhalb einer Öffnung des ersten Beschlagteils angeordnet sein. Der Exzenter kann radial spielfrei innerhalb der Öffnung des ersten Beschlagteils angeordnet sein. Der Exzenter kann radial innerhalb einer mit einer Gleitlagerbuchse ausgekleideten Öffnung angeordnet sein. Der Exzenter kann radial spielfrei innerhalb einer mit einer Gleitlagerbuchse ausgekleideten Öffnung angeordnet sein.

Das wenigstens eine Stützringsegment kann mittels eines Verbindungselements mit dem Mitnehmersegment verbunden sein. Das wenigstens eine Stützringsegment, das Verbindungselements und das Mitnehmersegment können einteilig ausgeführt sein. Das wenigstens eine Stützringsegment, das Verbindungselements und das Mitnehmersegment können einteilig gefertigt sein. Das wenigstens eine Stützringsegment, das Verbindungselements und das Mitnehmersegment können mehrteilig ausgeführt sein. Das wenigstens eine Stützringsegment, das Verbindungselements und das Mitnehmersegment können mehrteilig gefertigt sein. Das wenigstens eine Stützringsegment kann separat von dem Mitnehmersegment ausgebildet sein. Das wenigstens eine Stützringsegment ist kein funktioneller Bestandteil des Exzenters, da das Stützringsegment erst bei einer auf den Beschlag wirkenden Überlast eine Abstützwirkung erzeugt.

Das wenigstens eine Stützringsegment kann den beiden Keilsegmenten radial gegenüberliegend angeordnet sein. Radial gegenüberliegend bedeutet insbesondere, dass ein Schwerpunkt des Stützringsegments (bzw. ein gemeinsamer Schwerpunkt bei mehreren Stützringsegmenten) einem gemeinsamen Schwerpunkt der Keilsegmente radial gegenüberliegt. Radial gegenüberliegend soll dabei einen Toleranzbereich von bis zu +/- 45 Grad umfassen.

Das wenigstens eine Stützringsegment kann wenigstens eine erste Stützfläche zum radialen Abstützen wenigstens einer Stufe des ersten Beschlagteils aufweisen. Die wenigstens eine Stufe des ersten Beschlagteils kann umlaufend ausgebildet sein. Die Stufe des ersten Beschlagteils kann ein Kragenzug sein. Die Stufe kann ringförmig sein. Die Stufe kann eine axiale Stufe sein.

Das wenigstens eine Stützringsegment kann wenigstens eine zweite Stützfläche zum radialen Abstützen wenigstens einer Stufe des zweiten Beschlagteils aufweisen. Die wenigstens eine Stufe des zweiten Beschlagteils kann umlaufend ausgebildet sein. Die wenigstens eine Stufe des zweiten Beschlagteils kann ein Kragenzug sein. Die wenigstens eine Stufe kann ringförmig sein. Die wenigstens eine Stufe kann eine axiale Stufe sein.

Wenigstens eine Feder kann das wenigstens eine Stützringsegment, insbesondere radial, gegen die Stufe des zweiten Beschlagteils oder gegen die Stufe des ersten Beschlagteils vorspannen.

Der Beschlag kann zwei Stützringsegmente aufweisen. Die beiden Stützringsegmente können mittels eines Kraftspeichers, insbesondere einer Druckfeder und/oder einer Zugfeder, in Umfangsrichtung aufeinander zu vorgespannt sein. Die beiden Stützringsegmente können mittels des Kraftspeichers gegen einen Anschlag des Mitnehmersegments vorgespannt sein.

Das wenigstens eine Stützringsegment kann mittels eines ringförmigen Verbindungselements mit einem Mitnehmersegment des Exzenters verbunden sein. Das wenigstens eine Stützringsegment kann an dem Verbindungselement befestigt sein, insbesondere mit dem Verbindungselement verclipst sein. Das Verbindungselement kann eine Kraftspeicheranordnung, insbesondere wenigstens eine Feder, zur radialen Vorspannung des Verbindungselements aufweisen.

Die Aufgabe wird zudem durch einen erfindungsgemäßen Fahrzeugsitz, aufweisend wenigstens einen erfindungsgemäßen Beschlag, gelöst. Der Fahrzeugsitz kann ein Sitzteil und eine Rückenlehne aufweisen. Die Rückenlehne kann mittels wenigstens eines erfindungsgemäßen Beschlags an dem Sitzteil angelenkt sein. In weiteren Anwendungsmöglichkeiten kann der Beschlag als Höheneinsteller, Sitzneigungseinsteller, Wadenauflage-Neigungseinsteller oder
Schulterunterstützungsbeschlag eingesetzt werden.

Zusammenfassend und mit anderen Worten ausgedrückt ist durch die Erfindung ein Taumelbeschlag mit einer verbesserten Festigkeit bereitgestellt. Die Verzahnungen eines Zahnrads und eines Zahnkranzes werden nicht nur durch einen Exzenter im Zahneingriff gehalten, sondern zusätzlich auch durch wenigstens ein Stützringsegment. Das wenigstens eine Stützringsegment bietet somit eine zweite Abstützung zwischen den Beschlagteilen. Das wenigstens eine Stützringsegment liegt vorzugsweise radial gegenüber zwei Keilsegmenten des Exzenters. Das Stützringsegment kann am Außendurchmesser Spiel zu einer Stufe eines zweiten Beschlagteils und/oder an einem Innendurchmesser Spiel zu einer Stufe eines ersten Beschlagteils aufweisen. Nach der anfänglichen Verformung kommt das Material des Stützringsegments zum Einsatz, um die Verzahnungen weiter im Eingriff zu halten. Das Stützringsegment kann einteilig mit einem Mitnehmerring zur Einstellung des Beschlags (Neigungsverstellung einer Rückenlehne) verbunden sein. Alternativ kann das Stützringsegment formschlüssig mit einem Mitnehmerring zur Einstellung des Beschlags (Neigungsverstellung einer Rückenlehne) verbunden sein und von diesem angetrieben werden. Bei Verwendung eines zweigeteilten Stützringsegments, also von zwei Stützringsegmenten, können dies beiden Stützringsegmente durch wenigstens eine Zugfeder und/oder wenigstens eine Druckfeder tangential gegen den Mitnehmerring vorgespannt sein. Wenigstens ein Stützringsegment kann an einem Verbindungselement befestigt sein. Das Verbindungselement kann ein Träger sein. Das wenigstens eine Stützringsegment kann an das Verbindungselement montiert sein. Das wenigstens eine Stützringsegment kann an das Verbindungselement geclipst sein oder mit Material des Verbindungselements umspritzt sein. Das Verbindungselement kann formschlüssig mit dem Mitnehmerring verbunden sein und von diesem angetrieben sein. In das Verbindungselement kann eine Federfunktion integriert sein, die eine Vorspannung des Verbindungselements in radialer Richtung bewirkt. Ein Innendurchmesser des Stützringsegments kann dadurch Kontakt zu einer Stufe eines den Zahnkranz aufweisenden ersten Beschlagteils aufweisen und ein Außendurchmesser des Stützringsegments Spiel zu einer Stufe eines das Zahnrad aufweisenden zweiten Beschlagteils aufweisen. Nach der anfänglichen Verformung der Zähne kommt das Stützringsegments zum abstützenden Einsatz, so dass die Verzahnungen weiter im Eingriff gehalten sind.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Seitenansicht eines erfindungsgemäßen Fahrzeugsitzes, aufweisend einen erfindungsgemäßen Beschlag,
- Fig. 2:: einen Schnitt durch einen erfindungsgemäßen Beschlag gemäß eines ersten Ausführungsbeispiels entlang der Linie II - II in Fig. 3,
- Fig. 3:: einen Schnitt durch den Beschlag aus Fig. 2 entlang der Linie III - III in Fig. 2,
- Fig. 4:: einen Schnitt durch einen erfindungsgemäßen Beschlag gemäß eines zweiten Ausführungsbeispiels entlang der Linie IV - IV in Fig. 5.1,
- Fig. 5.1:: einen Schnitt durch den Beschlag aus Fig. 4 entlang der Linie V.1 - V.1 in Fig. 4,
- Fig. 5.2:: einen Schnitt durch den Beschlag aus Fig. 4 entlang der Linie V.2 - V.2 in Fig. 4,
- Fig. 6:: einen Schnitt durch einen erfindungsgemäßen Beschlag gemäß eines dritten Ausführungsbeispiels entlang der Linie VI - VI in Fig. 7.1,
- Fig. 7.1:: einen Schnitt durch den Beschlag aus Fig. 6 entlang der Linie VII.1 - VII.1 in Fig. 6,
- Fig. 7.2:: einen Schnitt durch den Beschlag aus Fig. 6 entlang der Linie VII.2 - VII.2 in Fig. 6,

- Fig. 8:: einen Schnitt durch einen erfindungsgemäßen Beschlag gemäß eines vierten Ausführungsbeispiels entlang der Linie VIII - VIII in Fig. 9,
- Fig. 9:: einen Schnitt durch den Beschlag aus Fig. 8 entlang der Linie IX - IX in Fig. 8,
- Fig. 10:: eine perspektivische Ansicht eines Stützringsegments während einer Montage an ein Verbindungselement des Beschlags aus Fig. 8, und
- Fig. 11:: eine Fig. 10 entsprechende perspektivische Ansicht des Stützringsegments nach einer Montage an das Verbindungselement.

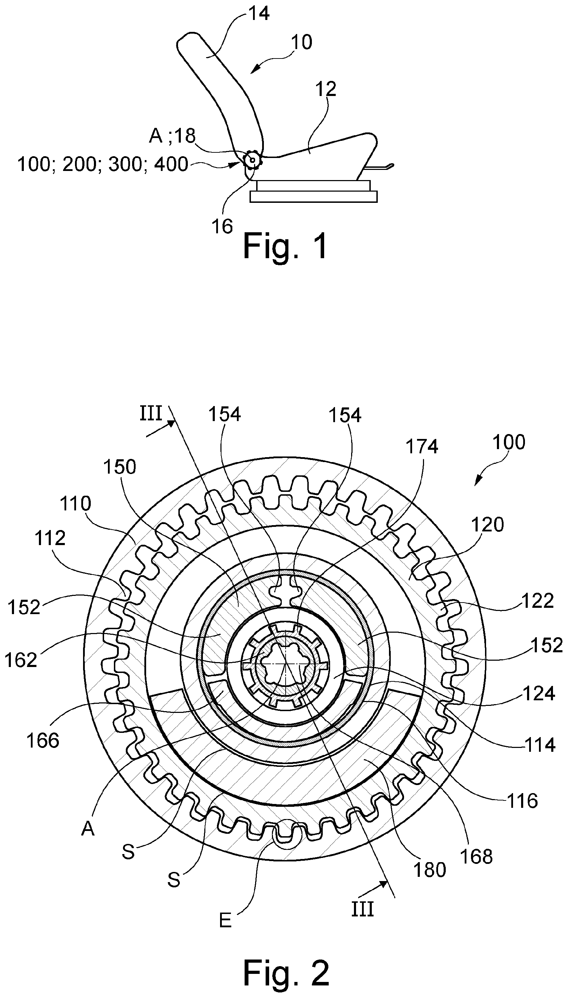

Fig. 1 zeigt schematisch einen erfindungsgemäßen Fahrzeugsitz 10 für ein Kraftfahrzeug mit einem erfindungsgemäßen Beschlag 100; 200; 300; 400 gemäß eines der nachfolgend beschriebenen Ausführungsbeispiele.

Der Fahrzeugsitz 10 weist ein Sitzteil 12 und eine relativ zu dem Sitzteil 12 in ihrer Neigung einstellbare Rückenlehne 14 auf. Zur Neigungseinstellung der Rückenlehne 14 wird manuell, beispielsweise mittels eines Handrades 16, oder motorisch, beispielsweise mittels eines Elektromotors, eine Antriebswelle 18 gedreht, welche horizontal in einem Übergangsbereich zwischen dem Sitzteil 12 und der Lehne 14 angeordnet ist. Auf beiden Seiten des Fahrzeugsitzes 10 greift die Antriebswelle 18 drehfest in jeweils einen Beschlag 100; 200; 300; 400 ein.

Die Antriebswelle 18 definiert eine Drehachse A. Die nachfolgend verwendeten Positionsangaben und Richtungsangaben, wie beispielsweise radial, axial und in Umfangsrichtung, beziehen sich auf diese Drehachse A der Antriebswelle 18, sofern nicht abweichend beschrieben. Radial bedeutet senkrecht zu der Drehachse A. Axial bedeutet in Richtung oder parallel zu der Drehachse A.

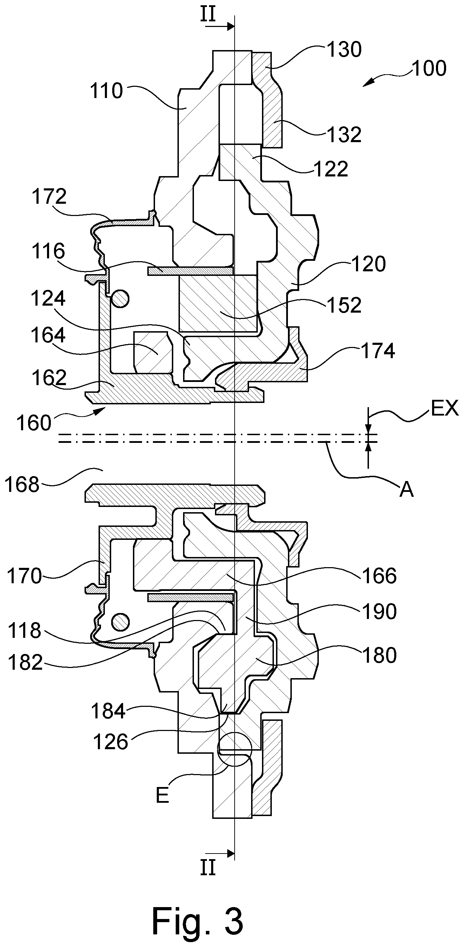

Die Figuren 2 und 3 zeigen einen Beschlag 100 gemäß eines ersten Ausführungsbeispiels für einen erfindungsgemäßen Fahrzeugsitz 10.

Der Beschlag 100 weist ein erstes Beschlagteil 110 und ein zweites Beschlagteil 120 auf, welche auf nachfolgend näher beschriebene Weise relativ zueinander um die Drehachse A verdrehbar sind, wobei der Drehbewegung eine Taumelbewegung überlagert ist. Die beiden Beschlagteile 110 und 120 lassen sich jeweils näherungsweise in eine kreisrunde Scheibenform einbeschreiben. Beide Beschlagteile 110 und 120 bestehen vorzugsweise aus Metall, insbesondere Stahl, der wenigstens bereichsweise gehärtet sein kann. Zur Aufnahme der axial wirkenden Kräfte, also zum axialen Zusammenhalt der Beschlagteile 110 und 120, ist ein Umklammerungsring 130 vorgesehen. Der Umklammerungsring 130 besteht vorzugsweise aus Metall, insbesondere Stahl, der vorzugsweise ungehärtet ist. Der Umklammerungsring 130 weist vorzugsweise eine im Wesentlichen flache Ringform auf.

Der Umklammerungsring 130 ist fest mit einem der beiden Beschlagteile 110, 120, im vorliegenden Ausführungsbeispiel mit dem ersten Beschlagteil 110, verbunden. Dazu ist ein radial äußerer Randabschnitt des Umklammerungsrings 130 mit einem radial äußeren Randabschnitt des ersten Beschlagteils 110 verschweißt. Mittels eines radial nach innen weisenden, umlaufenden Randbereichs 132 übergreift der Umklammerungsring 130 das relativ zu ihm bewegliche andere der beiden Beschlagteile 110, 120, vorliegend das zweite Beschlagteil 120, radial außen (d.h. dessen radial äußeren Randbereich), ohne die taumelnde Relativdrehbewegung der beiden Beschlagteile 110 und 120 zueinander zu behindern. Der Umklammerungsring 130 und das mit ihm fest verbundene erste Beschlagteil 110 oder zweite Beschlagteil 120 umklammern also das relativ zu ihnen bewegliche, andere der beiden Beschlagteile 110, 120. In baulicher Hinsicht bilden die beiden Beschlagteile 110 und 120 zusammen mit dem Umklammerungsring 130 eine scheibenförmige Einheit.

In einer Abwandlung des ersten Ausführungsbeispiels kann zwischen dem Umklammerungsring 130 und dem zweiten Beschlagteil 120 ein zusätzlicher Gleitring angeordnet sein.

Bei der Montage des Fahrzeugsitzes 10 wird das erste Beschlagteil 110 des Beschlags 100 fest mit einer Struktur der Rückenlehne 14 verbunden und das zweite Beschlagteil 120 des Beschlags 100 fest mit einer Struktur des Sitzteils 12 verbunden. Die Zuordnungen der Beschlagteile 110 und 120 können jedoch auch vertauscht sein, d.h. das erste Beschlagteil 110 kann alternativ fest mit der Struktur des Sitzteils 12 und das zweite Beschlagteil 120 fest mit der Struktur der Rückenlehne 14 verbunden sein. Der Beschlag 100 liegt im Kraftfluss zwischen Rückenlehne 14 und dem Sitzteil 12.

Der Beschlag 100 ist als ein Getriebebeschlag ausgebildet, bei welchem das erste Beschlagteil 110 und das zweite Beschlagteil 120 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 101 44 840 A1 beschrieben ist. Der Beschlag 100 ist somit ein Gelenkbeschlag.

Zur Ausbildung des Getriebes sind an dem ersten Beschlagteil 110 ein innenverzahnter Zahnkranz 112 und an dem zweiten Beschlagteil 120 ein außenverzahntes Zahnrad 122 ausgebildet, welche miteinander kämmen. Der Durchmesser des Kopfkreises der Außenverzahnung des Zahnrads 122 ist um wenigstens eine Zahnhöhe kleiner als der Durchmesser des Fußkreises der Innenverzahnung des Zahnkranzes 112. Ein entsprechender Unterschied der Zähneanzahl von Zahnrad 122 und Zahnkranz 112 von wenigstens einem Zahn ermöglicht eine Abwälzbewegung des Zahnkranzes 112 am Zahnrad 122. Vorliegend bildet das Zahnrad 122 den radial äußeren Rand des zweiten Beschlagteils 120, das heißt das zweite Beschlagteil 120 schließt radial außen mit dem Zahnrad 122 ab.

Eines der beiden Beschlagteile 110, 120, vorliegend das zweite Beschlagteil 120, weist einen Kragen 124 auf. Der Kragen 124 ist konzentrisch zum Zahnrad 122 ausgebildet. Der Kragen 124 kann als Kragenzug an dem zweiten Beschlagteil 120 angeformt (das heißt einstückig ausgebildet) oder als separate Hülse daran befestigt sein.

Zwei gekrümmte Keilsegmente 152 weisen jeweils eine gekrümmte Innenfläche und eine gekrümmte Außenfläche auf. Auf dem Kragen 124 sind die beiden Keilsegmente 152 mit den gekrümmten Innenflächen abgestützt. Mit den gekrümmten Außenflächen lagern die Keilsegmente 152 das andere der beiden Beschlagteile 110, 120, vorliegend das erste Beschlagteil 110. Hierfür ist eine Aufnahmeöffnung des letztgenannten Beschlagteils (vorliegend eine Aufnahmeöffnung 114 des ersten Beschlagteils 110) mit einer vorzugsweise drehfest eingepressten Gleitlagerbuchse 116 ausgekleidet, an der die Außenflächen der beiden Keilsegmente 152 anliegen. Die Begriffe "abstützen" und "lagern" sollen nicht auf eine bestimmte Richtung des Kraftflusses durch den Beschlag 100 beschränkt sein, da diese Richtung insbesondere von der Montage des Beschlags 100 im Fahrzeugsitz 10 abhängt.

Ein jeweils erstes Ende eines jeden Keilsegments 152 weist eine annähernd in radialer Richtung verlaufende Fläche, nachfolgend Breitseite genannt auf. Ein in Umfangsrichtung der Breitseite gegenüberliegendes Ende eines jeden Keilsegments 152 weist eine ebenfalls annähernd in radialer Richtung verlaufende Fläche, nachfolgend Schmalseite genannt, auf. Die Breitseite ist in radialer Richtung größer als die Schmalseite.

Die Keilsegmente 152, deren Breitseiten einander zugekehrt sind, nehmen, mit jeweils einer Öffnung 154 jeweils einen abgewinkelten Endfinger einer in den Figuren nicht dargestellten, vorgespannten und beispielsweise omega-förmigen Feder auf. Diese Feder beaufschlagt die Keilsegmente 152 in Umfangsrichtung, um sie auseinander zu drücken, wobei während des Einstellens des Beschlags 100 die Breitseiten der Keilsegmente 152 einander berühren und beaufschlagen können.

Wie zuvor beschrieben ist zum Einstellen des Neigungswinkels der Rückenlehne 14 um die Drehachse A die Antriebswelle 18 um die Drehachse A drehbar. Ein Mitnehmer 160 dient zum Übertragen der Drehbewegung der Antriebswelle 18 auf einen die beiden Keilsegmente 152 aufweisenden Exzenter 150. Der Mitnehmer 160 weist eine Mitnehmernabe 162 sowie einen drehfest mit der Mitnehmernabe 162 verbundenen Mitnehmerring 164 auf. Vorliegend ist der Mitnehmer 160 zweiteilig ausgeführt, indem die Mitnehmernabe 162 und der Mitnehmerring 164 separat ausgebildete Bauteile sind, die, insbesondere mittels einer Steckverzahnung formschlüssig, drehfest miteinander verbunden sind. Der Mitnehmer 160 besteht vorzugsweise aus Kunststoff.

Der Mitnehmerring 164 weist ein Mitnehmersegment 166 auf, das (in Umfangsrichtung betrachtet mit Spiel) zwischen den Schmalseiten der Keilsegmente 152 angeordnet ist. Das Mitnehmersegment 166 ist in Umfangsrichtung (bis auf das gegebenenfalls zwischenliegende Spiel) unmittelbar an die Schmalseiten der Keilsegmente 152 angrenzend angeordnet, so dass das Mitnehmersegment 166 durch Drehung des Mitnehmers 160 in direkten Kontakt mit einem der beiden Keilsegmente 152 kommt und dieses Keilsegment 152 unmittelbar antreibt. Das Mitnehmersegment 166 hat vorzugsweise die Form eines Hohlzylindersegments. Radial ist das Mitnehmersegment 166 zwischen dem Kragen 124 und der Gleitlagerbuchse 116 angeordnet.

Durch die beiden Keilsegmente 152 und das Mitnehmersegment 166 ist der Exzenter 150 gebildet. Der Exzenter 150 weist vorliegend eine unterbrochene, aber annähernd kreisrunde Außenkontur auf, die um eine Exzentrizität EX zur Drehachse A versetzt ist. Der Exzenter 150 drückt aufgrund der Exzentrizität EX die Verzahnungen des Zahnrads 122 und des Zahnkranzes 112 an einer Eingriffsstelle E maximal tief ineinander. Die Tiefe des Zahneingriffs nimmt beidseitig der Eingriffsstelle E in Umfangsrichtung ab. In einem der Eingriffsstelle E radial gegenüberliegenden Bereich sind die Verzahnungen von Zahnrad 122 und Zahnkranz 112 vollständig außer Eingriff und haben den größtmöglichen Abstand zueinander.

Die Mitnehmernabe 162 des Mitnehmers 160 ist in dem Kragen 124 um die Drehachse A drehbar gelagert. Die Mitnehmernabe 162 ist zentral mit einer Bohrung 168 zur Aufnahme der Antriebswelle 18 versehen. Das Profil der Bohrung 168 ist passend zum Profil der Antriebswelle 18, vorliegend einem Keilwellenprofil, ausgebildet. Die Mitnehmernabe 162 weist zudem umlaufend eine Abdeckscheibe 170 auf. Ein Außendurchmesser der Abdeckscheibe 170 ist größer als ein Innendurchmesser des Kragens 124. Auf der Außenseite des die Gleitlagerbuchse 116 aufweisenden Beschlagteils (vorliegend des ersten Beschlagteils 110) ist zwischen dessen radial mittleren Bereich und der Abdeckscheibe 170 ein Dichtring 172 vorgesehen, beispielsweise aus Gummi oder weichem Kunststoff, der mit der Abdeckscheibe 170 verbunden ist, insbesondere verclipst ist.

Der Mitnehmer 160 wird auf der Außenseite des den Kragen 124 aufweisenden zweiten Beschlagteils 120 durch einen vorzugsweise aufgeclipsten Sicherungsring 174 axial gesichert. Der Sicherungsring 174 erstreckt sich in axialer Richtung entlang eines Teiles der Mitnehmernabe 162, so dass die Mitnehmernabe 162 nicht direkt an der Innenseite des Kragens 124 anliegt, sondern unter Zwischenlage des Sicherungsrings 174 im Kragen 124 gelagert ist (und dadurch der Mitnehmer 160 am zweiten Beschlagteil 120 gelagert ist).

Bei einem Antrieb durch die sich (mehrfach) um die Drehachse A drehenden Antriebswelle 18 wird auf nachfolgend näher beschriebene Weise ein Drehmoment zunächst auf den Mitnehmer 160 und mittels des Mitnehmersegments 166 dann auf die Keilsegmente 152 des Exzenters 150 übertragen. Der Exzenter 150 dreht ich relativ zu den beiden Beschlagteilen 110, 120, wodurch eine Verlagerung der Richtung der Exzentrizität EX und damit eine umlaufende Verlagerung der Eingriffsstelle E erfolgt, woraus eine taumelnde Abwälzbewegung der Verzahnungen von Zahnkranz 112 und Zahnrad 122 erfolgt. Die Neigung der Rückenlehne 14 ist dadurch zwischen mehreren Gebrauchsstellungen stufenlos einstellbar.

Ein maximales Drehmoment, das von dem Beschlag 100 übertragen werden kann, hängt von der Qualität des Zahneingriffs zwischen Zahnrad 122 und Zahnkranz 112 im Bereich der Eingriffsstelle E und den beidseitig benachbarten Bereichen, in denen die Verzahnungen von Zahnrad 122 und Zahnkranz 112 zumindest noch teilweise im Zahneingriff sind, ab. Unter Belastung des Beschlags 100 vermeiden die Keilsegmente 152 unter Aufnahme von Radialkräften, dass sich der Abstand zwischen der Gleitlagerbuchse 116 des ersten Beschlagteils 110 und dem Kragen 124 des zweiten Beschlagteils 120 verkleinert und dadurch die Verzahnungen von Zahnrad 122 und Zahnkranz 112, insbesondere im Bereich der Eingriffsstelle E, voneinander wegbewegt werden.

Aufgrund seiner Anordnung zwischen der Gleitlagerbuchse 116 und dem Kragen 124 kann das Mitnehmersegment 166 Deformationen der Beschlagteile 110, 120, die radial außerhalb der Gleitlagerbuchse 116 stattfinden und für den Zahneingriff zwischen Zahnrad 122 und Zahnkranz 112 schädlich sind, nur indirekt und begrenzt reduzieren. Deshalb ist ein zusätzliches Stützringsegment 180 vorgesehen.

Das Stützringsegment 180 reduziert zusätzlich elastische und plastische Deformationen des ersten Beschlagteils 110 und/oder des zweiten Beschlagteils 120, die, unter hohen Belastungen auf den Beschlag 100, in einem Bereich radial außerhalb der Gleitlagerbuchse 116 auftreten können und sich nachteilig auf den Zahneingriff der Verzahnungen von Zahnkranz 112 und Zahnrad 122 auswirken. Dazu weist das Stützringsegment 180 eine erste, insbesondere kreiszylindrische, Stützfläche 182 zum radialen Abstützen einer umlaufenden, insbesondere kreiszylindrischen, Stufe 118 des ersten Beschlagteils 110 auf. Die Stufe 118 ist vorliegend durch eine umlaufende, radial äußere Fläche des Kragens 124 gebildet. Zudem weist das Stützringsegment 180 eine zweite, insbesondere kreiszylindrische, Stützfläche 184 zum radialen Abstützen einer umlaufenden, insbesondere kreiszylindrischen, Stufe 126 des zweiten Beschlagteils 120 auf. Das Stützringsegment 180 ist ein gekrümmtes Segment, das sich über einen Winkel kleiner 360 Grad, insbesondere kleiner 180 Grad, erstreckt. Vorliegend erstreckt sich das Stützringsegment 180 über einen gleichen stumpfen Winkel wie das Mitnehmersegment 166.

Bei einer auf den Beschlag 100 wirkenden Überlast, insbesondere bei einem um die Drehachse A wirkenden Überlast-Drehmoment, bietet das Stützringsegment 180 eine radiale Abstützung zwischen dem zweiten Beschlagteil 120 und dem Zahnrad 122 des ersten Beschlagteils 110 und somit zusätzlich zu der radialen Abstützung durch das Mitnehmersegment 166 eine radiale Abstützung zwischen dem ersten Beschlagteil 110 und dem zweiten Beschlagteil 120. Dadurch bleibt bei Überlast der Zahneingriff zwischen Zahnkranz 112 und Zahnrad 122 länger erhalten, woraus ein höheres maximal übertragbares Drehmoment, also eine höhere Festigkeit des Beschlags 100, resultiert.

Zwischen der ersten Stützfläche 182 und der Stufe 118 des ersten Beschlagteils 110 und/oder zwischen der zweiten Stützfläche 184 und der Stufe 126 des zweiten Beschlagteils 120 ist während eines Normalbetriebs des Beschlags 100 jeweils ein Spiel S in radialer Richtung vorhanden. Das Spiel S wird bei einer auf den Beschlag 100 wirkenden Überlast durch elastische und/oder plastische Bauteildeformation herausgestellt. Aufgrund des Spiels S dreht das Stützringsegment 180 während des Einstellens des Beschlags 100 im Normalbetrieb weitgehend reibungsfrei mit. Nachdem beim Auftreten einer Überlast das Spiel S beseitigt ist, kann das Stützringsegment 180 wie zuvor beschrieben in radialer Richtung abstützend wirken.

Das Stützringsegment 180 ist mittels eines, insbesondere weitgehend ebenen, Verbindungselements 190 drehfest mit dem Mitnehmersegment 166 verbunden. Das Verbindungselement 190 hat vorliegend die Form eines Ringscheibensegments, das heißt einer offenen Ringscheibe, die sich in Umfangsrichtung insbesondere über den gleichen Winkelbereich erstreckt wie das Stützringsegment 180. Das Mitnehmersegment 166, das Verbindungselement 190 und das Stützringsegment 180 sind vorliegend einteilig in den Mitnehmerring 164 integriert. Bei der Montage des Beschlags 100 werden zunächst der Mitnehmerring 164 und die Keilsegmente 152 (und somit der Exzenter 150) zwischen den beiden Beschlagteilen 110, 120 angeordnet und die Beschlagteile 110, 120 mittels des Umklammerungsrings 130 axial zueinander fixiert. Erst anschließend wird die Mitnehmernabe 162 in den Mitnehmerring 164 eingesteckt und mittels des Sicherungsrings 174 axial gesichert.

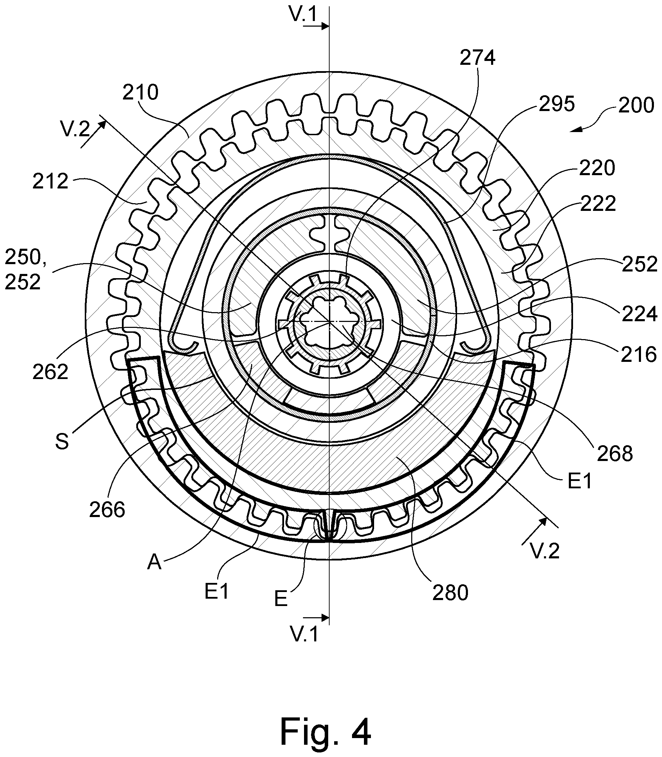

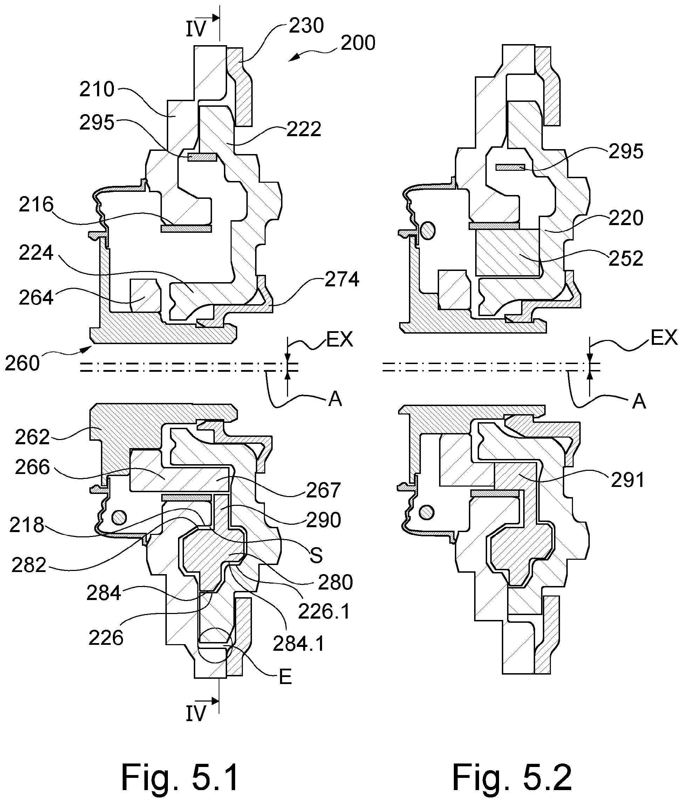

Die Figuren 4, 5.1 und 5.2 zeigen einen Beschlag 200 gemäß eines zweiten Ausführungsbeispiels für einen erfindungsgemäßen Fahrzeugsitz 10. Sofern nachfolgend nicht abweichend beschrieben, entspricht der Beschlag 200 hinsichtlich Aufbau und Funktion dem zuvor beschriebenen Beschlag 100. Gleiche oder gleichwirkende Bauteile tragen um den Wert 100 höhere Bezugszeichen.

Durch zwei Keilsegmente 252 und ein Mitnehmersegment 266 ist ein Exzenter 250 gebildet. Der Exzenter 250 weist vorliegend eine unterbrochene, aber annähernd kreisrunde Außenkontur auf, die um eine Exzentrizität EX zur Drehachse A versetzt ist. Der Exzenter 250 drückt entgegen der Richtung der Exzentrizität EX ein Zahnrad 222 eines zweiten Beschlagteils 220 und einen Zahnkranz 212 eines ersten Beschlagteils 210 an einer Eingriffsstelle E maximal tief ineinander. Die Tiefe des Zahneingriffs nimmt beidseitig der Eingriffsstelle E in Umfangsrichtung ab. In Fig. 4 ist rechts und links der Eingriffsstelle E jeweils ein erweiterter Eingriffsbereich E1 eingezeichnet, innerhalb dessen die Verzahnungen von Zahnrad 222 und Zahnkranz 212 mindestens teilweise in Zahneingriff und somit festigkeitssteigernd sind. In einem der Eingriffsstelle E radial gegenüberliegenden Bereich sind die Verzahnungen von Zahnrad 222 und Zahnkranz 212 vollständig außer Eingriff.

Auch die übrigen Ausführungsbeispiele der Beschläge 100; 300 haben entsprechende erweiterte Eingriffsbereiche, wenngleich diese in den entsprechenden Figuren nicht gekennzeichnet sind.

Ein Stützringsegment 280 reduziert zusätzlich elastische und plastische Deformationen des ersten Beschlagteils 210 und/oder des zweiten Beschlagteils 220, insbesondere im Bereich der Verzahnungen von Zahnkranz 212 und/oder Zahnrad 222, die unter hohen Belastungen in einem Bereich radial außerhalb einer Gleitlagerbuchse 216 stattfinden würden. Dazu weist das Stützringsegment 280 eine erste Stützfläche 282 zum radialen Abstützen einer umlaufenden Stufe 218 des ersten Beschlagteils 210 auf. Die Stufe 218 ist vorliegend durch eine umlaufende, radial äußere Fläche des Kragens 224 gebildet. Zudem weist das Stützringsegment 280 zwei zweite Stützflächen 284, 284.1 zum radialen Abstützen von jeweils einer Stufe 226, 226.1 des zweiten Beschlagteils 220 auf.

Das Stützringsegment 280 ist ein gekrümmtes Segment, das sich über einen Winkel kleiner 360 Grad, insbesondere kleiner 180 Grad erstreckt.

Bei einer auf den Beschlag 200 wirkenden Überlast, insbesondere bei einem um die Drehachse A wirkenden Überlast-Drehmoment, bietet das Stützringsegment 280 (wie zuvor beim ersten Ausführungsbeispiel beschrieben) zusätzlich zu einem Mitnehmersegment 266 eine radiale Abstützung zwischen dem ersten Beschlagteil 210 und dem zweiten Beschlagteil 220. Dadurch bleibt bei Überlast der Zahneingriff zwischen Zahnkranz 212 und Zahnrad 222 länger erhalten, woraus ein höheres maximal übertragbares Drehmoment, also eine höhere Festigkeit des Beschlags 200, resultiert.

Zwischen der ersten Stützfläche 282 und der Stufe 218 des ersten Beschlagteils 210 ist während eines Normalbetriebs des Beschlags 200 ein Spiel S in radialer Richtung vorhanden, das sich bei einer auf den Beschlag 200 wirkenden Überlast durch elastische und/oder plastische Bauteildeformation herausstellt.

Ein Kraftspeicher, vorliegend eine Feder 295, spannt das Stützringsegment 280 gegen die Stufe 226 und/oder die Stufe 226.1 vor, so dass wenigstens eine der beiden zweiten Stützflächen 284, 284.1 spielfrei an der zugeordneten Stufe 226 bzw. Stufe 226.1 anliegt. Dadurch ist eine Geräuschbildung durch radiale Relativbewegungen zwischen dem Stützringsegment 280 und den Beschlagteilen 210, 220 vermieden.

Die Feder 295 ist annähernd C-förmig geformt. Die beiden Endbereiche der Feder 295 sind beide an dem Stützringsegment 280 abgestützt, vorzugsweise jeweils an einer Stirnfläche eines der beiden Endbereiche des Stützringsegments 280. Ein mittiger Bereich der Feder 295 ist an einer umlaufenden Stufe des zweiten Beschlagteils 220 abgestützt, vorliegend an der Stufe 226, an der radial gegenüberliegend auch eine der beiden zweiten Stützflächen 284, 284.1 abgestützt ist.

Nachdem beim Auftreten einer Überlast das Spiel S beseitigt ist, wirkt das Stützringsegment 280 (wie zuvor beim ersten Ausführungsbeispiel beschrieben) in radialer Richtung abstützend zwischen den beiden Beschlagteilen 210, 220.

Das Stützringsegment 280 ist mittels eines Verbindungselements 290 drehfest mit dem separat ausgebildeten Mitnehmersegment 266 des Mitnehmerrings 264 verbunden. Das Verbindungselement 290 und das Stützringsegment 280 sind vorliegend einteilig ausgebildet. Das Stützringsegment 280 ist radial außerhalb des Verbindungselements 290 angeordnet. Das Verbindungselement 290 hat vorliegend die Form eines Ringscheibensegments, von dem radial innen zwei Finger 291 in axialer Richtung abstehen.

Die beiden Finger 291 sind in Umfangsrichtung zueinander beabstandet und nehmen das Mitnehmersegment 266 zwischen sich auf. Die beiden Finger 291 bilden eine, in axialer Richtung ausgebildete, Verzahnung, in die axial das als Gegenverzahnung wirkende Mitnehmersegment 266 eingesteckt ist. Die Finger 291 und das Mitnehmersegment 266 greifen derart ineinander, dass das Verbindungselement 290 (und somit auch das Stützringsegment 280) drehfest mit dem Mitnehmersegment 266 verbunden sind.

Das Mitnehmersegment 266 ist in Umfangsrichtung (bis auf ein gegebenenfalls zwischenliegendes Spiel) unmittelbar zwischen den Fingern 291 angeordnet. Jeder der beiden Finger 291 ist in Umfangsrichtung (bis auf das gegebenenfalls zwischenliegende Spiel) unmittelbar an eine Schmalseite eines der beiden Keilsegmente 252 angeordnet, so dass das Mitnehmersegment 266 durch Drehung des Mitnehmers 260 in direkten Kontakt mit einem der beiden Finger 291 kommt und dieser Finger 291 in direkten Kontakt mit einem der beiden Keilsegmente 252 kommt und dadurch dieses Keilsegment 252 antreibt.

Das Mitnehmersegment 266 und die beiden Finger 291 haben vorzugsweise jeweils die Form eines Hohlzylindersegments. Radial sind das Mitnehmersegment 266 und die beiden Finger 291 zwischen dem Kragen 224 und der Gleitlagerbuchse 216 angeordnet.

Aufgrund der separaten Ausbildung von einerseits Verbindungselement 290 / Stützringsegment 280 und andererseits Mitnehmersegment 266, kann bei der Montage des Beschlags 200 der die beiden Keilsegmente 252 und das Mitnehmersegment 266 aufweisende Exzenter 250 montiert werden, nachdem die Beschlagteile 210, 220 mittels des Umklammerungsrings 230 bereits axial zu einer das Stützringsegment 280 aufweisenden Vorbaugruppe fixiert sind. Erst anschließend werden der Exzenter 250 und die Mitnehmernabe 262 axial in die Vorbaugruppe eingesteckt und mittels des Sicherungsrings 274 axial gesichert.

Der Beschlag 200 des zweiten Ausführungsbeispiels unterscheidet sich von dem zuvor beschriebenen Beschlag 100 des ersten Ausführungsbeispiels insbesondere dadurch, dass das Stützringsegment 280 separat von dem Mitnehmerring 264 ausgeführt ist.

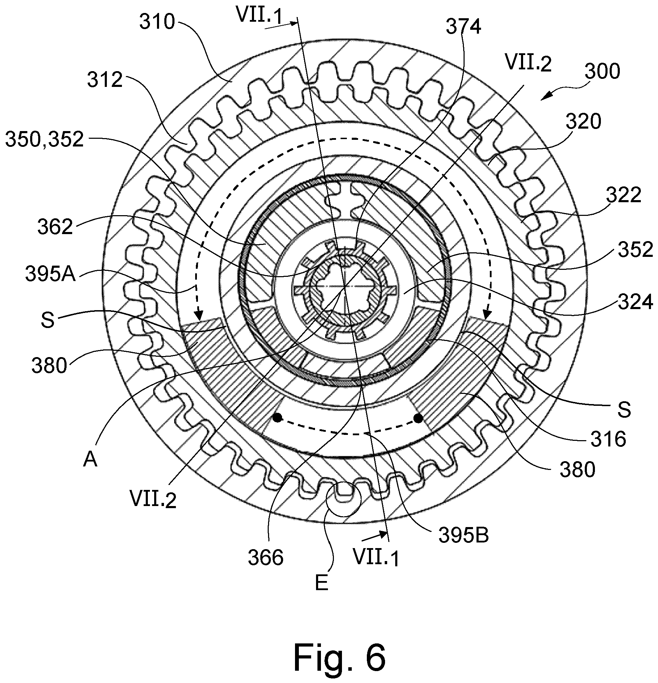

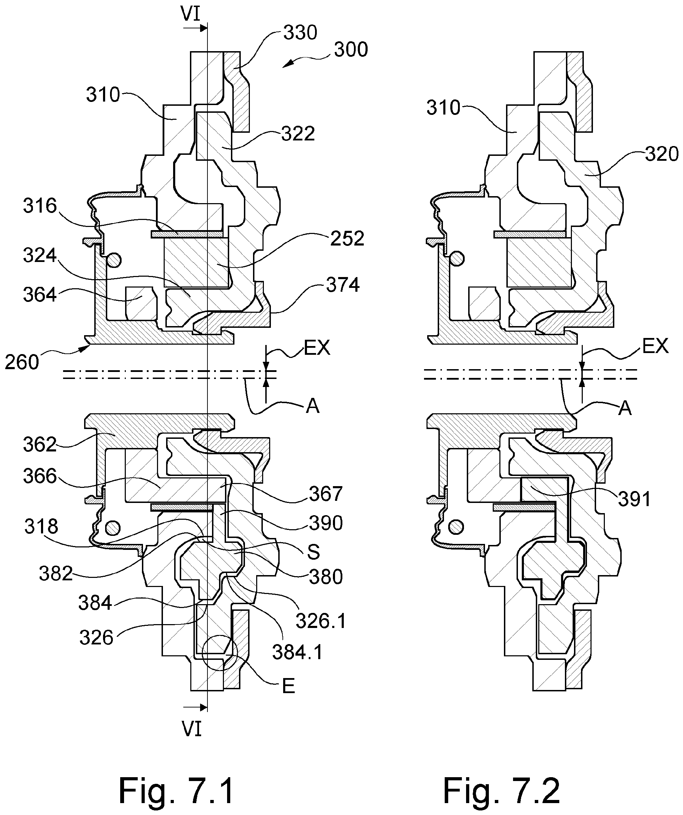

Die Figuren 6, 7.1 und 7.2 zeigen einen Beschlag 300 gemäß eines dritten Ausführungsbeispiels für einen erfindungsgemäßen Fahrzeugsitz 10. Sofern nachfolgend nicht abweichend beschrieben, entspricht der Beschlag 300 hinsichtlich Aufbau und Funktion dem zuvor beschriebenen Beschlag 200. Gleiche oder gleichwirkende Bauteile tragen gegenüber dem zweiten Ausführungsbeispiel um den Wert 100 höhere Bezugszeichen.

Im Gegensatz zu den Beschlägen 100; 200 der ersten beiden Ausführungsbeispiele, die jeweils genau ein Stützringsegment 180; 280 aufweisen, weist der Beschlag 300 des dritten Ausführungsbeispiels zwei Stützringsegmente 380 auf. Die beiden Stützringsegmente 380 reduzieren elastische und plastische Deformationen des ersten Beschlagteils 310 und/oder des zweiten Beschlagteils 320, insbesondere im Bereich der Verzahnungen von Zahnkranz 312 und Zahnrad 322, die unter hohen Belastungen in einem Bereich radial außerhalb einer Gleitlagerbuchse 316 auftreten. Dazu weisen die beiden Stützringsegmente 380 jeweils eine erste Stützfläche 382 zum radialen Abstützen einer umlaufenden Stufe 318 des ersten Beschlagteils 310 auf. Die Stufe 318 ist vorliegend durch eine umlaufende, radial äußere Fläche des Kragens 324 gebildet. Zudem weisen die Stützringsegmente 380 jeweils zwei zweite Stützflächen 384, 384.1 zum radialen Abstützen von jeweils einer Stufe 326, 326.1 des zweiten Beschlagteils 320 auf.

Die beiden Stützringsegmente 380 sind gekrümmte Segmente, die sich jeweils über einen Winkel kleiner 180 Grad erstrecken. Vorliegend erstrecken sich die Stützringsegmente 380 jeweils über einen Winkel kleiner 90 Grad.

Bei einer auf den Beschlag 300 wirkenden Überlast, insbesondere bei einem um die Drehachse A wirkenden Überlast-Drehmoment, bieten die beiden Stützringsegmente 380 zusätzlich zu einem Mitnehmersegment 366 eine radiale Abstützung zwischen dem ersten Beschlagteil 310 und dem zweiten Beschlagteil 320 und somit zwischen dem Zahnkranz 312 und dem Zahnrad 322. Dadurch bleibt bei Überlast der Zahneingriff zwischen Zahnkranz 312 und Zahnrad 322 länger erhalten, woraus ein höheres maximal übertragbares Drehmoment, also eine höhere Festigkeit des Beschlags 300, resultiert.

Zwischen der jeweils ersten Stützfläche 382 und der Stufe 318 des ersten Beschlagteils 310 und/oder zwischen den jeweils zweiten Stützflächen 384, 384.1 und den Stufen 326, 326.1 des zweiten Beschlagteils 320 ist während eines Normalbetriebs des Beschlags 300 jeweils ein Spiel S in radialer Richtung vorhanden, das sich bei einer auf den Beschlag 300 wirkenden Überlast durch elastische und/oder plastische Bauteildeformation herausstellt. Aufgrund des Spiels S dreht das Stützringsegment 380 während des Einstellens des Beschlags 300 im Normalbetrieb weitgehend reibungsfrei. Nachdem beim Auftreten einer Überlast das Spiel S beseitigt ist, kann das Stützringsegment 380 wie zuvor beschrieben in radialer Richtung abstützend wirken.

Nachdem beim Auftreten einer Überlast das Spiel S beseitigt ist, können die beiden Stützringsegmente 380 analog der zuvor beschrieben Ausführungsbeispiele in radialer Richtung abstützend wirken.

Jedes der beiden Stützringsegmente 380 ist mit einem von zwei Verbindungselementen 390 einteilig ausgebildet. Die beiden Verbindungselemente 390 der Stützringsegmente 380 sind jeweils mittels wenigstens eines gemeinsamen Kraftspeichers, vorliegend einer (Druck-) Feder 395A und/oder einer (Zug-) Feder 395B, in Umfangsrichtung gegen das Mitnehmersegment 366 vorgespannt. Der Kraftspeicher spannt die beiden Verbindungselemente 390 in Umfangsrichtung aufeinander zu und gegen das Mitnehmersegment 366, so dass beidseitig jeweils ein Verbindungselement 390 an dem Mitnehmersegment 366 anliegt. Dadurch ist eine Geräuschbildung durch Relativbewegungen zwischen den Verbindungselementen 390 und dem Mitnehmersegment 366 vermieden.

Aufgrund der separaten Ausbildung von einerseits Verbindungselementen 390 / Stützringsegmenten 380 und andererseits Mitnehmersegment 366, kann bei der Montage des Beschlags 300 der die beiden Keilsegmente 352 und das Mitnehmersegment 366 aufweisende Exzenter 350 montiert werden, nachdem die Beschlagteile 310, 320 mittels des Umklammerungsrings 330 bereits axial zu einer die Stützringsegmente 380 aufweisenden Vorbaugruppe fixiert sind. Erst anschließend werden der Exzenter 350 und die Mitnehmernabe 362 axial in die Vorbaugruppe eingesteckt und mittels des Sicherungsrings 374 axial gesichert.

Der Beschlag 300 des dritten Ausführungsbeispiels unterscheidet sich von den zuvor beschriebenen Beschlägen 100; 200 unter anderem dadurch, dass zwei Stützringsegmente 380 vorgesehen sind.

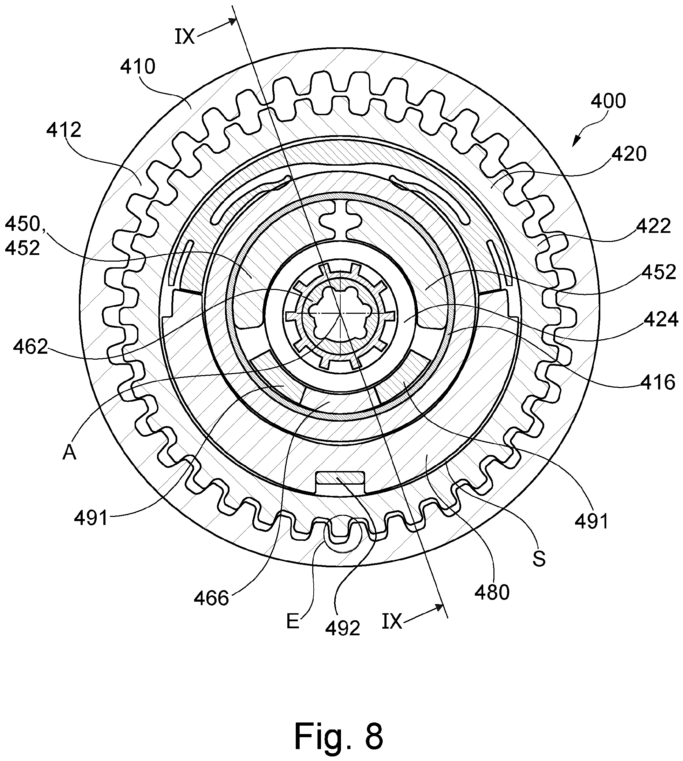

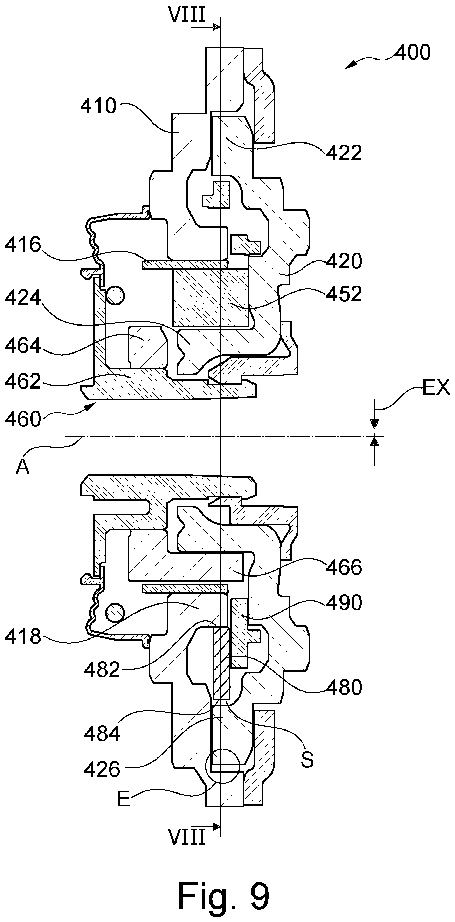

Genau ein Stützringsegment 480 weist auch ein in den Figuren 8 bis 10.2 dargestellter Beschlag 400 gemäß eines vierten Ausführungsbeispiels auf. Sofern nachfolgend nicht abweichend beschrieben, entspricht der Beschlag 400 hinsichtlich Aufbau und Funktion dem Beschlag 200 des zweiten Ausführungsbeispiels. Gleiche oder gleichwirkende Bauteile tragen gegenüber dem zweiten Ausführungsbeispiel um den Wert 200 höhere Bezugszeichen.

Durch zwei Keilsegmente 452 und ein Mitnehmersegment 466 ist ein Exzenter 450 gebildet. Der Exzenter 450 weist vorliegend eine unterbrochene, aber annähernd kreisrunde Außenkontur auf, die um eine Exzentrizität EX zur Drehachse A versetzt ist. Der Exzenter 450 drückt entgegen der Richtung der Exzentrizität EX ein Zahnrad 422 eines zweiten Beschlagteils 420 und einen Zahnkranz 412 eines ersten Beschlagteils 410 an einer Eingriffsstelle E maximal tief ineinander.

Ein Stützringsegment 480 reduziert zusätzlich elastische und plastische Deformationen des ersten Beschlagteils 410 und/oder des zweiten Beschlagteils 420, insbesondere im Bereich der Verzahnungen von Zahnkranz 412 und/oder Zahnrad 422, die unter hohen Belastungen in einem Bereich radial außerhalb einer Gleitlagerbuchse 416 stattfinden würden. Dazu weist das Stützringsegment 480 eine erste Stützfläche 482 zum radialen Abstützen einer umlaufenden Stufe 418 des ersten Beschlagteils 410 auf. Zudem weist das Stützringsegment 480 eine zweite Stützfläche 484 zum radialen Abstützen von einer Stufe 426 des zweiten Beschlagteils 420 auf.

Das Stützringsegment 480 ist ein gekrümmtes Segment, das sich über einen Winkel kleiner 360 Grad, insbesondere größer 180 Grad erstreckt.

Bei einer auf den Beschlag 400 wirkenden Überlast, insbesondere bei einem um die Drehachse A wirkenden Überlast-Drehmoment, bietet das Stützringsegment 480 (wie bei den zuvor beschriebenen Ausführungsbeispielen) zusätzlich zu dem Exzenter 450 eine radiale Abstützung zwischen dem ersten Beschlagteil 410 und dem zweiten Beschlagteil 420. Dadurch bleibt bei Überlast der Zahneingriff zwischen Zahnkranz 412 und Zahnrad 422 erhalten, woraus ein höheres maximal übertragbares Drehmoment, also eine höhere Festigkeit des Beschlags 400, resultiert.

Zwischen der zweiten Stützfläche 484 und der Stufe 426 des zweiten Beschlagteils 420 ist während eines Normalbetriebs des Beschlags 400 ein Spiel S in radialer Richtung vorhanden sein, das sich bei einer auf den Beschlag 400 wirkenden Überlast durch elastische und/oder plastische Bauteildeformation herausstellt. Nachdem beim Auftreten einer Überlast das Spiel S beseitigt ist, wirkt das Stützringsegment 480 in radialer Richtung abstützend zwischen den beiden Beschlagteilen 410, 420.

Das Stützringsegment 480 ist mittels eines ringförmigen Verbindungselements 490 drehfest mit dem Mitnehmersegment 466 des Mitnehmerrings 464 verbunden. Das Verbindungselement 490 und das Stützringsegment 480 sind vorliegend separat ausgebildete Bauteile. Das Verbindungselement 490 kann aus Kunststoff gefertigt sein. Das Stützringsegment 480 kann aus Metall, insbesondere Sintermetall, oder Kunststoff gefertigt sein. Das Stützringsegment 480 ragt radial über das Verbindungselement 490 hinaus. Das Stützringsegment 480 ist an dem Verbindungselement 490 befestigt. Das Stützringsegment 480 ist sichelförmig.

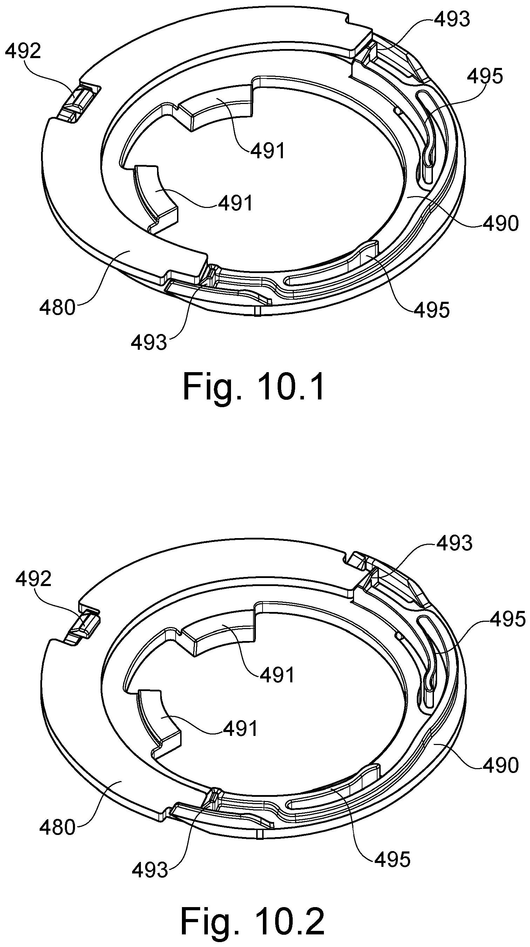

Das Stützringsegment 480 und das Verbindungselement 490 sind mittels einer Clipverbindung miteinander verbunden. Wie in den Figuren 10.1 und 10.2 dargestellt, weist das Verbindungselement 490 einen Haken 492 und zwei Federarme (Clipse) 493 auf. Während der Montage des Stützringsegments 480 an das Verbindungselement 490 wird das Stützringsegment 480 zunächst unter den Haken 492 geschoben (siehe Fig. 10.1) und anschließend mit den Federarmen 493 verclipst (siehe Fig. 10.2).

Von dem Verbindungselement 490 stehen radial innen zwei Finger 491 in axialer Richtung ab. Die beiden Finger 491 sind in Umfangsrichtung zueinander beabstandet und nehmen das Mitnehmersegment 466 zwischen sich auf. Die beiden Finger 491 bilden eine, in axialer Richtung ausgebildete, Verzahnung, in die axial das als Gegenverzahnung wirkende Mitnehmersegment 466 eingesteckt ist. Die Finger 491 und das Mitnehmersegment 466 greifen derart ineinander, dass das Verbindungselement 490 (und somit auch das Stützringsegment 480) drehfest mit dem Mitnehmersegment 466 verbunden sind.

Das Mitnehmersegment 466 ist in Umfangsrichtung (bis auf ein gegebenenfalls zwischenliegendes Spiel) unmittelbar zwischen den Fingern 491 angeordnet. Jeder der beiden Finger 491 ist in Umfangsrichtung (bis auf das gegebenenfalls zwischenliegende Spiel) unmittelbar an eine Schmalseite eines der beiden Keilsegmente 452 angeordnet, so dass das Mitnehmersegment 466 durch Drehung des Mitnehmers 460 in direkten Kontakt mit einem der beiden Finger 491 kommt und dieser Finger 491 in direkten Kontakt mit einem der beiden Keilsegmente 452 kommt und dadurch dieses Keilsegment 452 antreibt.

Das Mitnehmersegment 466 und die beiden Finger 491 haben vorzugsweise jeweils die Form eines Hohlzylindersegments. Radial sind das Mitnehmersegment 466 und die beiden Finger 491 zwischen dem Kragen 424 und der Gleitlagerbuchse 416 angeordnet.

Das Verbindungselement 490 weist zudem eine Kraftspeicheranordnung, vorliegend zwei Federn 495, auf. Die beiden Federn 495 sind radial gegenüber dem Stützringsegment 480 angeordnet. Die beiden Federn 495 sind einteilig mit dem Verbindungselement 490 verbunden, insbesondere als ein Kunststoff-Spritzgussteil ausgeführt. Die beiden Federn 495 sind als Federarme ausgeführt, die sich an dem ersten Beschlagteil 410, vorliegend auf der Stufe 418 des ersten Beschlagteils 410, abstützen. Mittels der beiden Federn 495 ist das Stützringsegment 480 gegen die Stufe 418 des ersten Beschlagteils 410 vorgespannt, so dass die erste Stützfläche 482 spielfrei an der zugeordneten Stufe 418 anliegt. Dadurch ist eine Geräuschbildung durch radiale Relativbewegungen zwischen dem Stützringsegment 480 und den Beschlagteilen 410, 420 vermieden.

Die in der vorstehenden Beschreibung, den Ansprüchen und den Figuren offenbarten Merkmale können sowohl einzeln als auch in Kombination für die Verwirklichung der Erfindung in ihren verschiedenen Ausgestaltungen von Bedeutung sein, soweit sie im Schutzbereich der Ansprüche bleiben.

### Bezugszeichenliste

- 10: Fahrzeugsitz
- 12: Sitzteil
- 14: Rückenlehne
- 16: Handrad
- 18: Antriebswelle

- 100: Beschlag
- 110: erstes Beschlagteil
- 112: Zahnkranz
- 114: Aufnahmeöffnung
- 116: Gleitlagerbuchse
- 118: Stufe
- 120: zweites Beschlagteil
- 122: Zahnrad
- 124: Kragen, Kragenzug
- 126: Stufe
- 130: Umklammerungsring
- 132: Randbereich
- 150: Exzenter
- 152: Keilsegment
- 154: Öffnung
- 160: Mitnehmer
- 162: Mitnehmernabe
- 164: Mitnehmerring
- 166: Mitnehmersegment
- 168: Bohrung
- 170: Abdeckscheibe
- 172: Dichtring
- 174: Sicherungsring
- 180: Stützringsegment
- 182: erste Stützfläche
- 184, 184.1: zweite Stützfläche
- 190: Verbindungselement

- 200: Beschlag
- 210: erstes Beschlagteil
- 212: Zahnkranz
- 216: Gleitlagerbuchse
- 218: Stufe
- 220: zweites Beschlagteil
- 222: Zahnrad
- 224: Kragen, Kragenzug
- 226: Stufe
- 226.1: Stufe
- 230: Umklammerungsring
- 250: Exzenter
- 252: Keilsegment
- 260: Mitnehmer
- 262: Mitnehmernabe
- 264: Mitnehmerring
- 266: Mitnehmersegment
- 267: Verzahnung
- 274: Sicherungsring
- 280: Stützringsegment
- 282: erste Stützfläche
- 284; 284.1: zweite Stützfläche
- 284.1: zweite Stürtzfläche
- 290: Verbindungselement
- 291: Finger
- 295: Feder

- 300: Beschlag
- 310: erstes Beschlagteil
- 312: Zahnkranz
- 316: Gleitlagerbuchse
- 318: Stufe
- 320: zweites Beschlagteil
- 322: Zahnrad
- 324: Kragen, Kragenzug
- 326: Stufe
- 326.1: Stufe
- 330: Umklammerungsring
- 350: Exzenter
- 352: Keilsegment
- 360: Mitnehmer
- 362: Mitnehmernabe
- 364: Mitnehmerring
- 366: Mitnehmersegment
- 367: Anschlag
- 374: Sicherungsring
- 380: Stützringsegment
- 382: erste Stützfläche
- 384; 384.1: zweite Stützfläche
- 384.1: zweite Stürtzfläche
- 390: Verbindungselement
- 391: Finger
- 395A: (Druck-) Feder
- 395B: (Zug-) Feder

- 400: Beschlag
- 410: erstes Beschlagteil
- 412: Zahnkranz
- 416: Gleitlagerbuchse
- 418: Stufe
- 420: zweites Beschlagteil
- 422: Zahnrad
- 424: Kragen, Kragenzug
- 426: Stufe
- 450: Exzenter
- 452: Keilsegment
- 460: Mitnehmer
- 462: Mitnehmernabe
- 464: Mitnehmerring
- 466: Mitnehmersegment
- 480: Stützringsegment
- 482: erste Stützfläche
- 484: zweite Stützfläche
- 490: Verbindungselement
- 491: Finger
- 492: Haken
- 493: Federarm, Clip
- 495: Feder

- A: Drehachse
- E: Eingriffsstelle
- E1: erweiterter Eingriffsbereich
- EX: Exzentrizität
- S: Spiel

## Patentansprüche

1. Beschlag (100; 200; 300; 400) für einen Fahrzeugsitz (10), der Beschlag (100; 200; 300; 400) aufweisend ein erstes Beschlagteil (110; 210; 310; 410), ein zweites Beschlagteil (120; 220; 320; 420) und einen das erste Beschlagteil (110; 210; 310; 410) und das zweite Beschlagteil (120; 220; 320; 420) um eine Exzentrizität (EX) exzentrisch zueinander lagernden Exzenter (150; 250; 350; 450), das erste Beschlagteil (110; 210; 310; 410) aufweisend einen Zahnkranz (112; 212; 312; 412) und das zweite Beschlagteil (120; 220; 320; 420) aufweisend ein Zahnrad (122; 222; 322; 422), wobei der Zahnkranz (112; 212; 312; 412) und das Zahnrad (122; 222; 322; 422) miteinander in Zahneingriff sind, wobei zum Antrieb einer relativen Abwälzbewegung von Zahnrad (122; 222; 322; 422) und Zahnkranz (112; 212; 312; 412) der Exzenter (150; 250; 350; 450) um eine Drehachse (A) drehbar ist, **dadurch gekennzeichnet, dass** wenigstens ein mit dem Exzenter (150; 250; 350; 450) mitdrehendes Stützringsegment (180; 280; 380; 480) radial außerhalb des Exzenters (150; 250; 350; 450) angeordnet ist, und bei einer auf den Beschlag (100; 200; 300; 400) wirkenden Überlast, insbesondere bei einem um die Drehachse (A) wirkenden Überlast-Drehmoment, das erste Beschlagteil (110; 210; 310; 410) und das zweite Beschlagteil (120; 220; 320; 420) mittels des wenigstens einen Stützringsegments (180; 280; 380; 480) radial aneinander abstützbar sind.

2. Beschlag (100; 200; 300; 400) nach Anspruch 1, **dadurch gekennzeichnet, dass** der Exzenter (150; 250; 350; 450) zwei Keilsegmente (152; 252; 352; 452) und ein Mitnehmersegment (166; 266; 366; 466) aufweist.

3. Beschlag (100; 200; 300; 400) nach Anspruch 2, **dadurch gekennzeichnet, dass** das wenigstens eine Stützringsegment (180; 280; 380; 480) mittels eines Verbindungselements (190; 290; 390; 490) mit dem Mitnehmersegment (166; 266; 366; 466) verbunden ist.

4. Beschlag (100; 200; 300; 400) nach Anspruch 2 oder 3, **dadurch gekennzeichnet, dass** das wenigstens eine Stützringsegment (180; 280; 380; 480) den beiden Keilsegmenten (152; 252; 352; 452) radial gegenüberliegend angeordnet ist.

5. Beschlag (100; 200; 300; 400) nach einem der Ansprüche 1 bis 4, **dadurch gekennzeichnet, dass** das wenigstens eine Stützringsegment (180; 280; 380; 480) wenigstens eine erste Stützfläche (182; 282; 382; 482) zum radialen Abstützen wenigstens einer Stufe (118; 218; 318; 418) des ersten Beschlagteils (110; 210; 310; 410) aufweist.

6. Beschlag (100; 200; 300; 400) nach Anspruch 5, **dadurch gekennzeichnet, dass** die wenigstens eine Stufe (118; 218; 318; 418) des ersten Beschlagteils (110; 210; 310; 410) umlaufend ausgebildet ist.

7. Beschlag (100; 200; 300; 400) nach einem der Ansprüche 1 bis 6, **dadurch gekennzeichnet, dass** das wenigstens eine Stützringsegment (180; 280; 380; 480) wenigstens eine zweite Stützfläche (184; 284, 284.1; 384, 384.1; 484) zum radialen Abstützen wenigstens einer Stufe (126; 226, 226.1; 326, 326.1; 426) des zweiten Beschlagteils (120; 220; 320; 420) aufweist.

8. Beschlag (100; 200; 300; 400) nach Anspruch 7, **dadurch gekennzeichnet, dass** die wenigstens eine Stufe (126; 226, 226.1; 326, 326.1; 426) des zweiten Beschlagteils (120; 220; 320; 420) umlaufend ausgebildet ist.

9. Beschlag (200; 400) nach einem der Ansprüche 5 bis 8, **dadurch gekennzeichnet, dass** wenigstens eine Feder (295; 495) das wenigstens eine Stützringsegment (280; 480) gegen die Stufe (226, 226.1) des zweiten Beschlagteils (220) oder gegen die Stufe (418) des ersten Beschlagteils (410) vorspannt.

10. Beschlag (200; 300; 400) nach einem der Ansprüche 2 bis 7, **dadurch gekennzeichnet, dass** das wenigstens eine Stützringsegment (280; 380; 480) separat von dem Mitnehmersegment (266; 366; 466) ausgebildet ist.

11. Beschlag (300) nach einem der Ansprüche 1 bis 10, **dadurch gekennzeichnet, dass** zwei Stützringsegmente (380) vorgesehen sind, die mittels eines Kraftspeichers, insbesondere vorliegend einer Druckfeder (395A) und/oder einer Zugfeder (395B), in Umfangsrichtung aufeinander zu vorgespannt sind, insbesondere jeweils gegen einen Anschlag (367) des Mitnehmersegments (366) vorgespannt sind.

12. Beschlag (400) nach einem der Ansprüche 1 bis 10, **dadurch gekennzeichnet, dass** das wenigstens eine Stützringsegment (480) mittels eines ringförmigen Verbindungselements (490) mit einem Mitnehmersegment (466) des Exzenters (450) verbunden ist.

13. Beschlag (400) nach Anspruch 12, **dadurch gekennzeichnet, dass** das wenigstens eine Stützringsegment (480) an dem Verbindungselement (490) befestigt ist, insbesondere mit dem Verbindungselement (490) verclipst ist.

14. Beschlag (400) nach Anspruch 12 oder 13, **dadurch gekennzeichnet, dass** das Verbindungselement (490) eine Kraftspeicheranordnung, insbesondere wenigstens eine Feder (495), zur radialen Vorspannung des Verbindungselements (490) aufweist.

15. Fahrzeugsitz (10), insbesondere für ein Kraftfahrzeug, aufweisend wenigstens einen Beschlag (100; 200; 300; 400) nach einem der Ansprüche 1 bis 14.
